(19) **Europäisches Patentamt**
**European Patent Office**
**Office européen des brevets**

(11) **EP 1 814 260 A2**

(12) **EUROPEAN PATENT APPLICATION**

(43) Date of publication:
**01.08.2007 Bulletin 2007/31**

(51) Int Cl.:
**H04L 12/28** $^{(2006.01)}$

(21) Application number: **07009994.0**

(22) Date of filing: **14.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.10.2004 US 619400 P**
**07.09.2005 US 714938 P**

(62) Document number(s) of the earlier application(s) in accordance with Art. 76 EPC:
**05812413.2 / 1 800 438**

(71) Applicant: **Lagotek Corporation**
**Bellevue, WA 98009 (US)**

(72) Inventors:
• **Luskin, Eugene**
**Issaquah**
**Washington 98029 (US)**
• **Kizhnerman, Vadim**
**Kirkland, Washington 98034 (US)**
• **Grach, Alexander**
**Bothell, Washington 98012 (US)**
• **Tcherkachine, Lev**
**Redmond, Washington 98052 (US)**

(74) Representative: **Whitlock, Holly Elizabeth Ann et al**
**R G C Jenkins,**
**26 Caxton Street**
**London SW1H 0RJ (GB)**

Remarks:
This application was filed on 18 - 05 - 2007 as a divisional application to the application mentioned under INID code 62.

(54) **Distributed wireless home network and commercial electrical automation system**

(57) A central controller is disclosed to enable home and commercial automation for automatic, remote control of a wide variety of lights, appliances, HVAC and other systems utilizing a wireless distributed network. The central controller preferably employs a standard CPU and embedded operating system software. Graphical and audio user interfaces can be implemented. Harmonic distortion due to non-linear AC loads are mitigated in single-phase circuits through intelligent control of the loads and/or through intelligent complementary control of linear loads.

FIG. 3

**EP 1 814 260 A2**

## Description

Related Applications

This application claims priority based on U.S. Provisional Patent Application Serial No. 60/619,400, filed October 14, 2004; and based on U.S. Provisional Patent Application Serial No. 60/714,938, filed September 7, 2005. Both of said provisional applications are hereby incorporated herein by this reference.

Copyright Notice

© 2005 Lagotek Corporation. A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright rights whatsoever. 37 CFR § 1.71(d).

Technical Field

The invention pertains to control systems for controlling various electrical loads, apparatus and systems in the context of home and commercial automation, with particular focus on improvements in user convenience, energy efficiency and reliability.

Background of the Invention

Home automation heretofore is either very limited, to basic tasks such as remote control of light dimmers and switches, or it involves complicated, expensive, custom hardware and software The known home automation systems have very limited "intelligence" and awkward interfaces. Simple wireless modules for lights and household appliances are commercially available from Intermatic Incorporated of Spring Grove, IL. See www.intermatic.com. Other wireless light modules including dimmers are available from Lutron and Zwave. It is well known that harmonic interference on AC power lines causes heat loss inefficiencies, and undue wear on equipment such as transformers. Harmonics are caused by non-linear loads, such as typical light dimmers, because they actively switch the power on and off to adjust the light level, as distinguished from a passive regulator such as a potentiometer or rheostat which, although resistive and therefore linear, is highly energy inefficient.

Passive solutions, such as filters, are known for reducing harmonic distortion, but they have limitations and also dissipate energy. Active solutions have been developed for reducing harmonics in 4-wire, 3-phase systems, as taught in U.S. Pat. No. 5,568,371 to Pitel et al. That solution, however, is not applicable to the usual single-phase household circuit. Moreover, Pitel et al. describe an active filter that requires substantial hardware housed in a separate box.

The need remains for improvements in home and commercial automation to reduce costs, enable a wide variety of applications without custom hardware development, improve user convenience and comfort, as well as reliability.

Summary

The present invention is directed in various aspects to a variety of improvements in home or commercial automation and energy savings. Additional aspects and advantages will be apparent from the following detailed description of preferred embodiments, which proceeds with reference to the accompanying drawings.

Brief Description of the Drawings

Fig. 1A is a front plan view illustrating replacement of a conventional light switch with a central controller.

Fig. 1 B is an exploded view illustrating a central controller sized and arranged for installation in lieu of a conventional light switch or outlet in a standard home electrical box.

Figs. 2A-2C illustrate examples of front panel display content of a central controller.

Fig. 3 is one example of a home automation network illustrating application of various components including integrated as well as external wireless controllers.

Fig. 4 is a functional hardware block diagram of one example of a central controller consistent with the present invention.

Fig. 5 is a simplified residential floor plan illustrating an example of an HVAC application of the invention for improved convenience and energy efficiency.

Fig. 6 is a simplified schematic diagram illustrating an asymmetric biprocessor architecture of a central controller in accordance with one aspect of the invention.

Fig. 7A shows linear loads in a single-phase A.C. power circuit.

Fig. 7B shows the essentially sinusoidal electrical current waveform in the circuit of FIG. 7A.

FIG. 8A illustrates a plurality of non-linear loads, here conventional light dimmers each set to 33% brightness.

FIG. 8B shows the resulting non-linear electrical current waveform through the loads of FIG. 8A.

FIG. 9A illustrates a system in accordance with one embodiment of the present invention for normalizing non-linear loading in a single-phase power circuit to reduce harmonic distortions.

FIG. 9B shows the resulting load current using intelligent controllers for phase control to linearize the load.

FIG. 10 illustrates a system arranged for regulating a resistive load so as to compensate for one or more non-linear loads in the same circuit.

FIG. 11 shows illustrative waveforms and communication paths for the system of FIG. 10.

FIG. 12 shows a waveform generated by the central controller for normalizing the circuit of FIGS. 10 and 11 by regulating the resistive load.

Detailed Description of Preferred Embodiments

Nomenclature Note: In the provisional application, we used the term "Control Panel" to refer to "microprocessor based electronic device, capable of running operating systems which supports the wireless protocol, graphical user interface, touch screen functionality ...". (Provisional page 3.) In the present application, we will instead use the term "central controller" to refer to various devices and embodiments functionally similar to what was previously called the "Control Panel". This is to avoid confusion as the typical Central Controller, in accordance with some embodiments of the invention, will itself include a front panel or control panel that provides an interface to the controller.

Thus "control panel" will be used herein consistent with its ordinary meaning. For example, in one preferred embodiment, a central controller is disposed in a standard electrical box, and the front panel of the central controller is installed over it, similar to a conventional light switch cover plate. The term "central controller" is not intended to imply that only one central controller can be used in a given installation such as a home or office. To the contrary, in most cases, a plurality of central controllers will be deployed so as to form a distributed or mesh network, communicating with one another as further described later. That said, a single central controller can be used in smaller applications.

The provisional application also defined a "wireless controller" as, "any chip implementing one or more of several radio interfaces to allow communication over wireless links with various communication networks supporting the wireless protocol." This may be confusing, both internally and because the typical central controller described herein in some embodiments is correctly characterized as wireless. In this document, we will use "wireless transceiver" to refer to apparatus that implements communication over a wireless channel, which may comprise an access point, for example in the case of 802.11 implementations, or not, as in the case of Bluetooth or other ad hoc wireless protocols.

The central controller preferably includes one or more wireless transceivers for communication with other central controllers in the same network, and for communications with various other components, some of which are "controllers" (but not central controllers). The central controller(s) is where the user(s) mainly interface with the system. Other controllers, such as dimmers, respond to commands from a central controller to operate lights or other electrical loads. Controllers can be deployed for various electrical and mechanical tasks, as further described below.

In accordance with the present invention, various embodiments of a central controller are disclosed. The central controller preferably is wireless, but it can be hardwired for communications. Other particulars of preferred embodiments are as follows.

Basically, the central controller is a microprocessor-based electronic device to enable home or commercial automation functionality. It is the main hardware component of a home automation network, although as noted there can be more than one central controller. The central controller preferably executes at least one industry standard operating system, so that it provides an "open platform" for third party application software developers. Some of those applications will include lighting (both interior and exterior of a structure), HVAC (heating, ventilation and air conditioning), security (audio, motion detecting, video surveillance, etc.), entertainment, energy savings, etc. Implementation of any desired application can be accomplished with suitable programming and applying the invention as described herein.

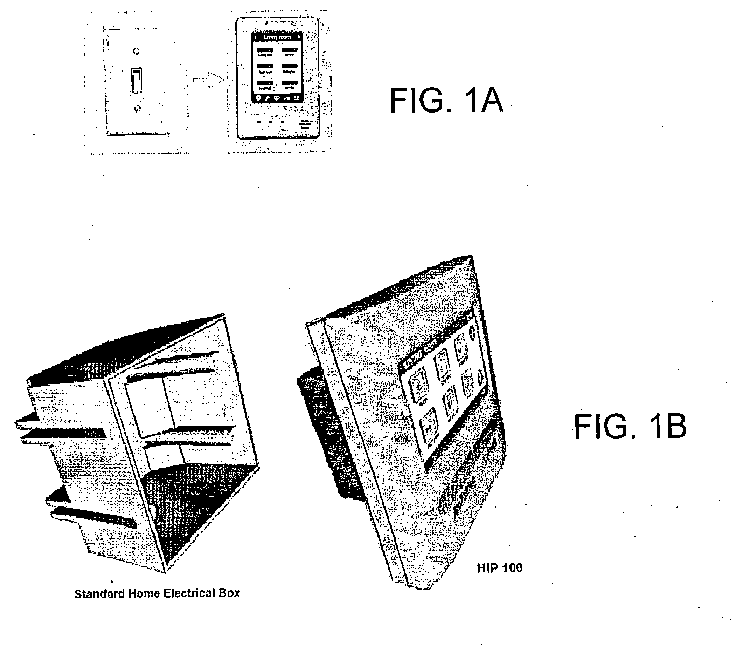

In one preferred embodiment, the central controller is sized and arranged to fit inside of a standard household electrical box of the type that would commonly house a conventional light switch or outlet. A small central controller could be fit into a single switch box, while a two-gang, three-gang or larger box can accommodate a larger central controller and a correspondingly larger display panel -further described below. FIG. 1A illustrates the front appearance of a light switch replaced by a central controller in accordance with an embodiment of the invention. FIG. 1 B is an exploded view showing in more detail how a central controller can be deployed in a standard electrical box. The household wiring (available in the box) provides power for the central controller, although it can be battery powered or have battery backup.

The front panel of the central controller, which is removable for service and generally covers the central controller, preferably includes a display screen, which preferably comprises a touch-sensitive area, at least in part, for user input by touching an icon or other textual or graphic indicia to make a selection or adjustment.

The display / touch screen can be employed by suitable programming to provide an effective graphical user interface. In a simple example, one screen display (not shown) can be used to emulate a conventional light switch or dimmer control. This is a useful default value, say for a bedroom, where the user commonly enters the room and expects a light switch in the usual location inside the door. A central controller can replace the light switch in that box, and the default screen display can look like a light switch, and indeed function to turn the light off and on, responsive to a user press of the touch screen.

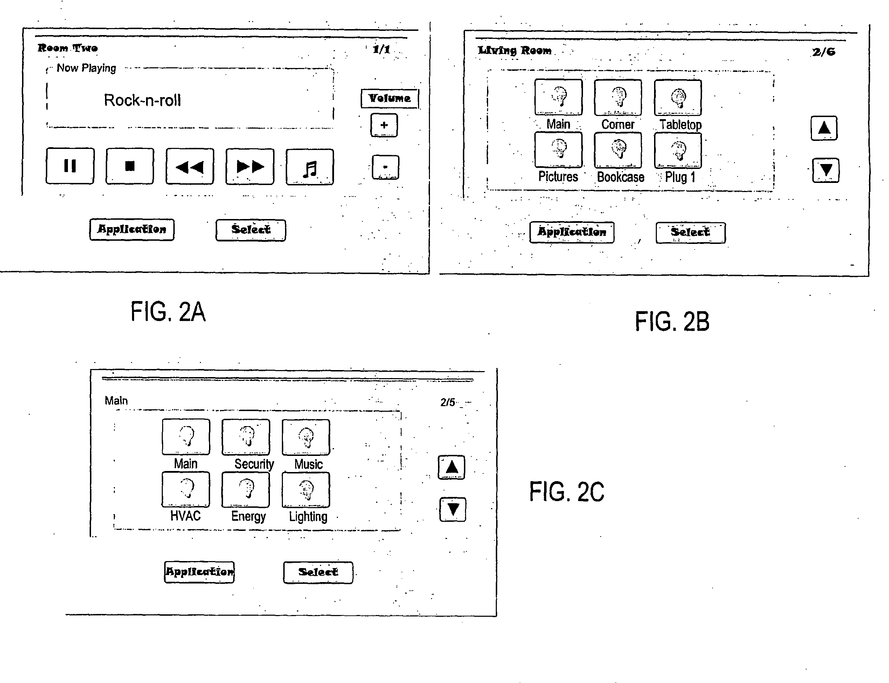

Referring again to FIG. 2A, it illustrates certain preferred features of the front panel. For example, the panel includes a few "hard" buttons -actual physical buttons, that can be operated at any time without using the touch screen. These are labeled for illustration as "Application" and "Select". Continuing the bedroom example, after the default display is used to turn on the light, the user may press "Application" to see a list or set of icons representing applications currently available to her at that central controller. She may select "Audio" by pressing the corresponding icon, in which case the screen display changes again to present the audio player controls of FIG. 2A. By touching the screen where the pause, play, etc buttons are shown, the user can conveniently operate the audio system from the central controller. This is accomplished by a wireless controller that is inside or coupled to the audio equipment to receive corresponding commands from the central controller.

Note the top of the screen display preferably shows the location of the central controller, for example "Room Two" (FIG. 2A), "Living Room" (FIG. 2B), "Kitchen" (FIG. 2C) etc. The display preferably also includes a screen number where a given function requires more than one screen display. For example, in the living room, the lighting control screens span a total of six screens, with screen "2/6" shown in FIG. 2B. These principles of graphical user interface can be applied to other applications as well. In general, the central controller can interact with any electrical apparatus or system within the local network. The local network comprises one or more central controllers together with one or more, preferably many, controllers that communicate with the central controller and interact with various apparatus coupled to those controllers, such as audio, video, HVAC equipment, lighting, etc.

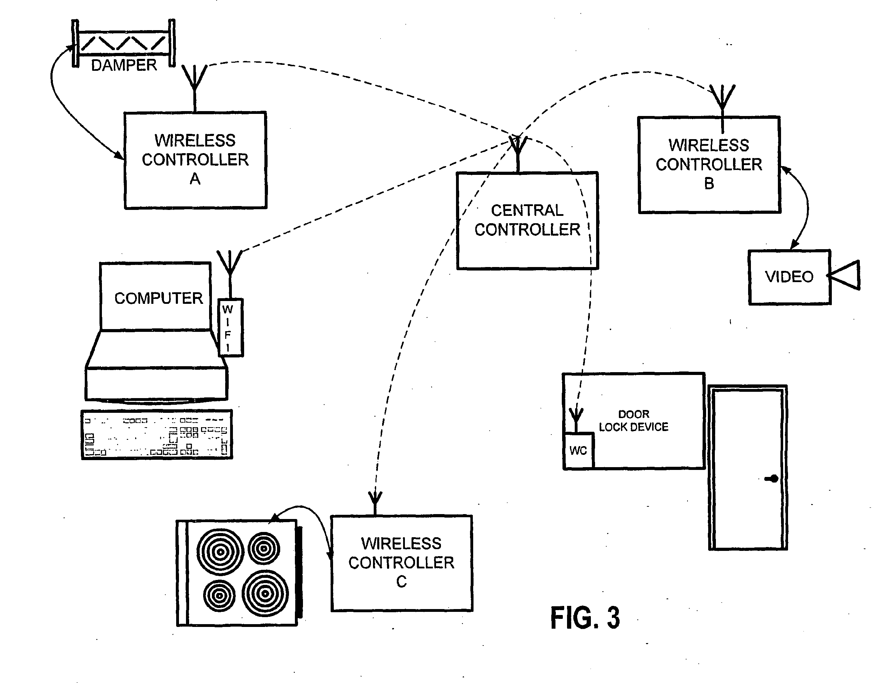

Some of these features are illustrated in FIG. 3 -a simplified network diagram. In this example, a central controller implements wireless communications, shown by dashed lines, with various components of the network. For example, a wireless controller "A" is connected to a motorized damper for HVAC control. It adjusts the damper in response to commands from the central controller. Another wireless controller "B" is connected to a video camera for security surveillance. The controller can adjust the camera in response to commands from the central controller, as well as communicate video data to the central controller. Surveillance software in the central controller may include, for example, image recognition software for detecting an intruder outside the premises by analyzing the captured video data. A wireless hub can be used to interface multiple appliances to a central controller where they are not coupled to it directly.

Wireless controllers may vary in their particular features and characteristics as necessary. A simple, low cost controller, for example, can be used merely to switch a light or outlet on and off responsive to remote commands. Simple wireless modules for lights and household appliances are commercially available from Intermatic Incorporated of Spring Grove, IL. See www.intermatic.com. Other wireless light modules including dimmers are available from Lutron and Zwave. In preferred embodiments, a central controller in accordance with the present invention executes application software and includes wireless transceivers that are compatible with these existing modules so as to include them in the new network. More sophisticated controllers, called "intelligent controllers," are discussed later with regard to managing harmonics caused by non-linear loads.

FIG. 3 also illustrates a wireless controller "C" coupled to an appliance such as a stove. The central controller can check to ensure that the stove is not left on when no one is at home. Motion or thermal detectors, as part of the network, can be used to determine whether people are at home. The same sensors are conveniently used for HVAC/ comfort control, automated lighting applications, security, etc. In that regard, a door lock device is shown in FIG. 3 as well. Here, the wireless transceiver capability is integrated into the door lock device itself; a separate wireless controller is not required. This device can be used to remotely lock or unlock the door, but also to report its status, open, closed, locked, to the security application software executing on the central controller in some embodiments of the invention. Various security algorithms can be used to secure the wireless communications in the network and prevent unauthorized intrusion.

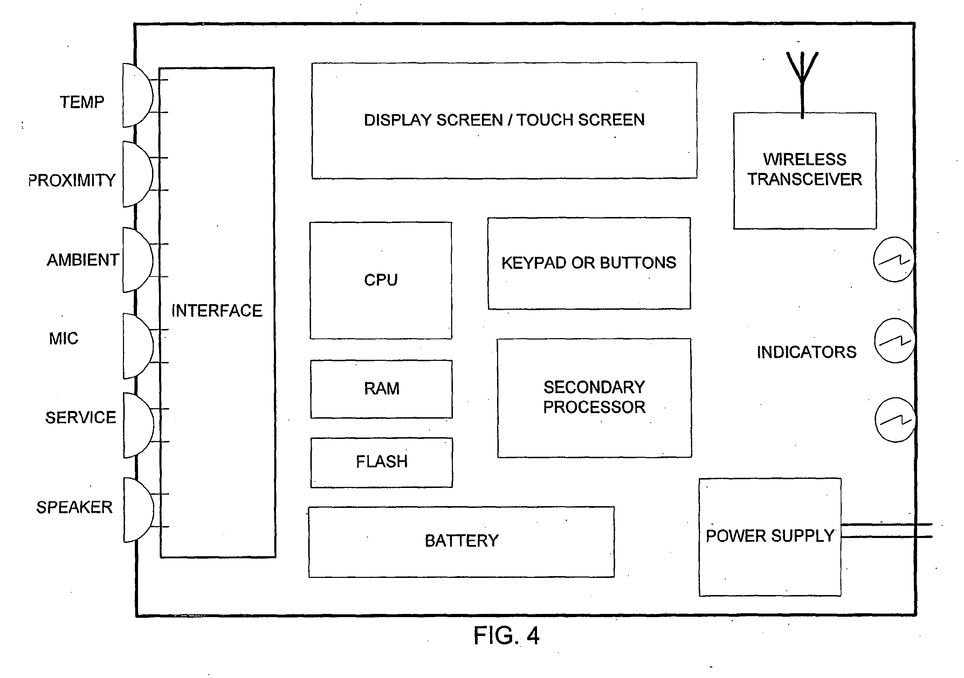

FIG. 4 is a simplified hardware block diagram of one example of a central controller consistent with the present invention. Interconnections among the various components are omitted to avoid obscuring the drawing. Preferably, the CPU is an industry standard off-the-shelf microprocessor, along with internal and or external memory as appropriate, including both volatile and non-volatile memory such as flash memory. Preferably the CPU is provided with at least one standard embedded operating system such as Windows CE®, Linux Embedded, QnX or the like.

In the example illustrated, sensors are provided for sensing local ambient temperature, proximity (of a person), ambient light level, and so on. A microphone enables voice command inputs (in cooperation with voice recognition software stored in the memory and executable on the CPU). A speaker enables audible alarms, warnings or other announcements. A service connection, for example a standard connector such as an USB port can be provided for diagnostics, software loading, etc. Alternatively, the wireless transceiver can be used for communication with a computer or similar device for such functions. Other embodiments may have more of fewer sensors, inputs or outputs. Additional details of various specific embodiments of the invention will be within the design capabilities of persons skilled in electronics and microprocessor applications in view of the present disclosure. A alternative biprocessor architecture that incorporates the secondary processor is described later.

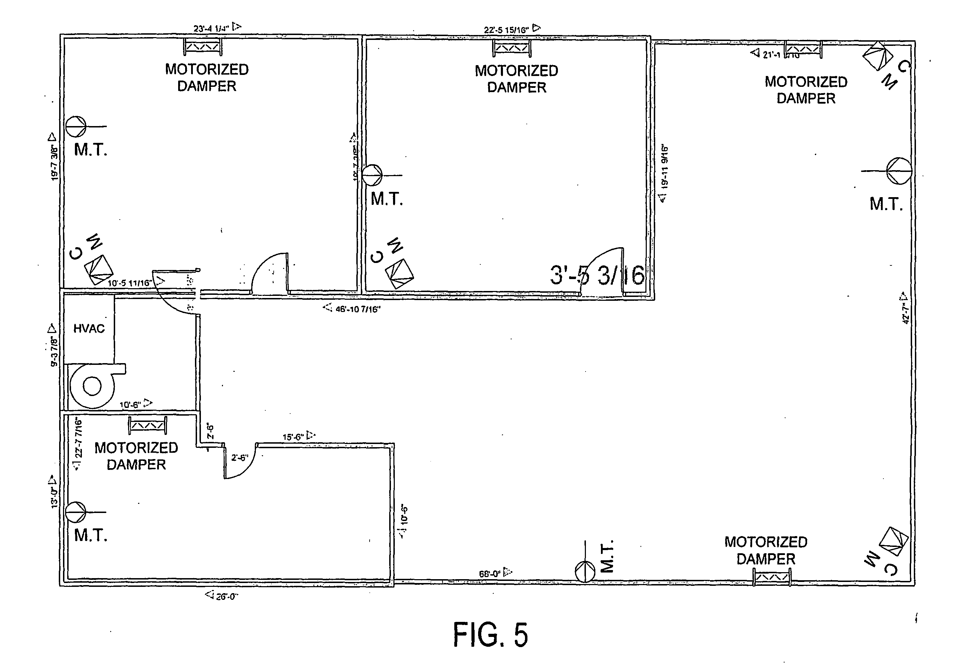

FIG. 5 is a simplified residential floor plan to illustrate selected aspects of HVAC control using the present invention. Here, each room illustrated includes a motion or proximity sensor "M" and a temperature sensor "T". These may be "standalone" remote sensor units, with the ability to communicate with a central controller. Or, one or more of them may itself be a local central controller in that room. Either way, comfort control software executing on the central controller can determine which rooms are occupied, as well as the current temperature of each room. Based on that information, it can adjust each local room HVAC damper(s) to optimize comfort while minimizing energy consumption. The system can also be used to control the HVAC system itself as part of this process.

To briefly summarize this section, the invention enables a user to conveniently: control any wireless light switch in any room; control any wireless power outlet; control any other electrical appliance which can be controlled via wireless protocol (coffee makers, rice makers, floor lamps, pool/tub electrical systems, smoke detectors, electrical locks, garage openers, etc), i.e. appliances that have integrated or "built-in" wireless control capability; and access media stored on the wireless server or on any other media storage device connected directly or indirectly by the wireless protocol to other system components. Of course, some embodiments of the invention will implement fewer than all of these features; they are not all required by the invention. The key point is that the central controller and distributed network described herein can be used in myriad ways, without significant hardware changes or added expense, because this system is fundamentally application software driven.

Additional functionality can include: monitor video from any video camera or other video signal source connected directly or indirectly by the wireless protocol to other system components; access settings and control the HVAC system in the household; have voice communication via the phone or inside the household between two or more central controller's; operate electrical devices which support infrared remote controls via the device which is equipped with the wireless controller and infrared emitter; access, control, query any other electronic devices via wireless protocol or infrared sequences.

All the foregoing functions of the central controller can be accessed with the touch screen or by voice command, or automatically (under software control) in response to sensor inputs, time or other trigger conditions or a combination of trigger conditions. In a preferred embodiment, any particular setting or parameter of the system can be used as a part of a saved profile. Any profile can be selected by user or automatically (according to schedule, day light, etc.).

The user interface of the central controller is designed to accommodate people's habit of entering a room and switching the light on. To do so, the user interface in one embodiment implements the "default switch" virtual button. This graphic button is displayed as the default screen display on the cc after a short timeout period following the last active user input. Any combination of the parameters or settings can be controlled by the "default button". Thus, for example, where each bedroom has a central controller installed, the occupant need merely touch the central controller panel once upon arrival to set lighting, audio, heat, etc. as determined by that user's personal profile. Profiles can be used in individual spaces and or network-wide. Some illustrative home-wide profiles are as follows:

Profile 1: No one home

Lighting: Lights off except, after dark, ON bathroom #1 and bedroom #3 and hall #2.
Security: Full ON after one minute for exit, check door locks, commence video surveillance.
Comfort: Lower all living spaces to 62-degrees F.
Entertainment: Off

Profile 2: Home: Commencing at 4:00 pm on weekdays

Lighting: Lights ON after dark, OFF bathroom #1 and all bedrooms; ON living room default settings
Security: door and window chimes only, discontinue video surveillance.
Comfort: Raise all living spaces to 72-degrees F.
Entertainment: Audio enabled, download daily news feed.
Profile 3: Sunday morning; etc....Profile 4: Sunday afternoons, etc.
Profile 5: short vacation, and so on. Profiles are created under software control and stored in non-volatile memory in the appropriate central controller.

Asymmetrical biprocessor architecture

An asymmetrical biprocessor architecture is optional but preferred to improve the reliability, availability and serviceability of home or commercial automation systems such as those described above.
Modem home automation system contain hundreds electronic components and hundred of thousands to millions lines of lines of software code. The failure of a single component (hardware and software) may render the system completely unusable which is unacceptable for home automation applications. There is a need for reliable, available and easily services and updated system.
There are two main contributing factors that can lead to failure in a home automation system:

1. Software errors. Bugs occurs because it's impracticable to provide 100% testing of large programs.
2. Main processor has a lot of dependencies on other electronic components. Failure of any of these components as failure of CPU itself makes the whole system unworkable. Also, the typical system contains fragile components like a touch screen, so there is always a risk that this screen can be broken, and even when formally the system is alive, it becomes very difficult to use it.

We propose a new design for reliable home automation systems using two different processors. As described above, a home automation system comprises at least one central controller. It may used several of them. In many cases, all of the central controllers will be the same - to lower cost and simplify installation of a distributed network. We propose that a central controller comprise at least two different processors.

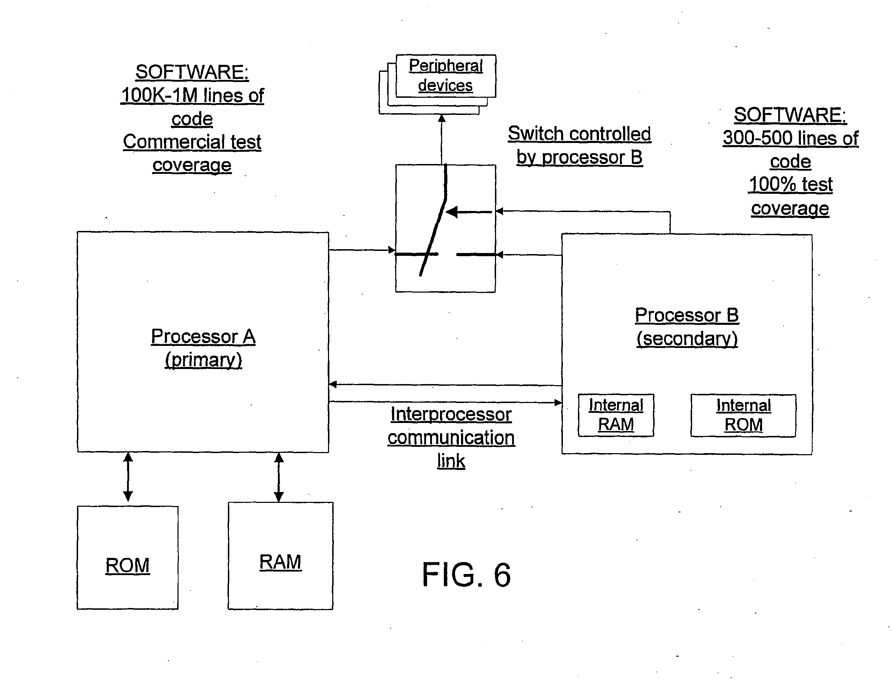

Referring now to FIG. 6, a simplified schematic diagram illustrates one example of an asymmetric biprocessor architecture of a central controller in accordance with one aspect of the invention. Here, a Processor A is a main controller which performs the full-scale functionality of the system, optionally including "nice-to-have" but non-essential features like speech recognition, a graphical user interface, position sensors, etc. Preferably it is a relatively fast processor, which is connected to external memory (ROM and or RAM) as described earlier. On the contrary, the Processor B is relatively slow embedded microcontroller, with few dependencies on external components. It has three main functions:

1. Verify that the program in Processor A is alive and is performing normally (watchdog functionality).

2. In the case of failure in Processor A, it switches the main controlling circuits of periphery on itself and performing the basic functionality (e.g., turning the lights/electrical loads on/off).

3. Log all system failures in a non-volatile memory journal.

As shown in the figure, a switch controlled by Processor B is used to take over interaction with all peripheral devices and interfaces in the event that Processor B detects a failure of Processor A. Monitoring is implemented via the communication link shown. The software for Processor B preferably contains relatively few -only several hundred lines of code, so that the algorithms can be 100% tested.

Accordingly, the risk of a software bug in Processor B is much (by the inventors' estimate better than 100 times) lower.

Given that the number of dependent components is smaller in this design, the possibility of hardware failure is lower as well (it is proportional to the number of dependent components and pin count of the processor). This contrasts with a simple "mirroring" or backup scheme in which a second processor, identical to Processor A, is deployed as a backup. That approach improves reliability, but at higher cost, and with inferior results.

<u>Energy Savings Techniques</u>

In this section we describe new methods and systems for saving energy in residential and commercial facilities, especially those where non-linear loads create harmonic distortions on the supply. In some embodiments, we seek to normalize electrical loads associated with dimming light systems and other non-linear electrical loads. Such normalization reduces heat dissipation in distribution transformers and the harmonic distortion created by non-linear loads that are typical in most residential and commercial electrical systems. In some embodiments, energy savings are accomplished by leveraging a distributed home automation network.

Thus one aspect of the present invention enhances distributed wireless automation systems by introducing system level components that reduce harmonic distortion and heat that can cause energy inefficiencies and electrical infrastructure failures. The sources of these inefficiencies are lighting systems that utilize dimming controls, computer and pulse power supplies, televisions and other non-linear loads.

One aspect of the invention is directed to reducing K-factor and associated energy losses by intelligent control of dimmed electrical loads by the distributed home automation network. The electrical load in a typical residential location is non-linear and consequently it generates harmonic currents -mainly odd harmonics in the case of single-phase nonlinear loads. These currents are usually dissipated in distribution transformers resulting in overheating and energy losses. The harmonic distortions are quantitatively described by a "K-Factor," defined as

$$K\text{-Factor} = S(Ih)2h2$$

where $Ih$ is the load current at harmonic $h$, expressed in a per-unit basis such that the total RMS current equals one amp, i.e., $S(Ih)2 = 1.0$

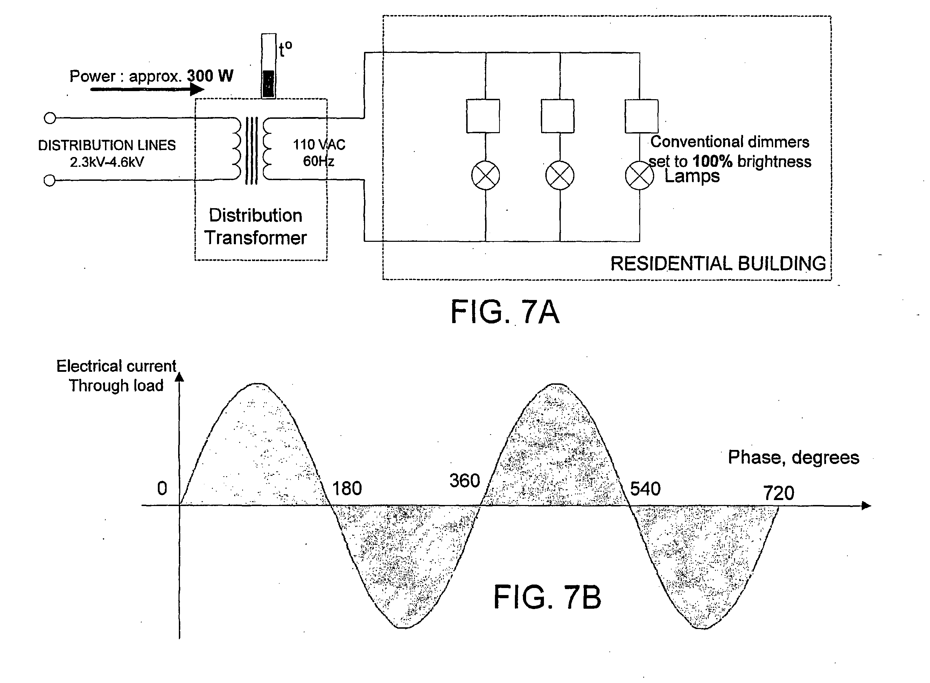

K-Factor is a weighing of the harmonic load currents according to their effects on transformer hating, as derived from ANSI/IEEE C57.110. A K-Factor of 1.0 indicates a linear load (no harmonics). The higher the K-Factor, the greater the harmonic heating effects. Figure 7A shows linear load when K-Factor = 1 and thermal losses in the distribution transformer are low. FIG. 7B shows the essentially sinusoidal electrical current waveform through the load of FIG. 7A. However, many of the modem electronic loads increasingly found in residential and commercial buildings are nonlinear-dimmed light, computers, pulse power supplies, etc. The typical K-factor value for the office is usually from 4 to 9 which corresponds to the 15 - 20% increase in the heat losses.

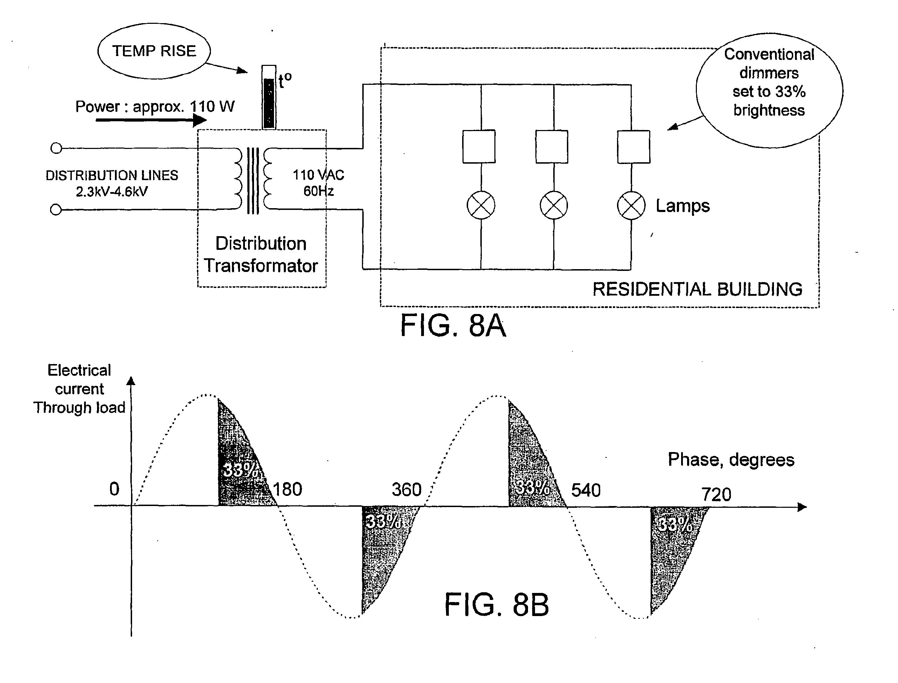

FIG. 8A illustrates a plurality of non-linear loads, here conventional light dimmers, set to 1/3 brightness, in a single-phase power circuit. FIG. 8B shows the resulting non-linear electrical current waveform through the load of FIG. 8A. This waveform has substantial harmonic distortion, meaning that there is substantial current flow in the third and subsequent odd harmonics of the line fundamental frequency (60 Hz.). As noted earlier, this scenario leads to thermal losses, equipment wear, and voltage waveform degradation in the power supply system.

In accordance with the present invention, improved power control is implemented to remedy this situation, without sacrificing operational functionality in any noticeable way. Two schemes are presented; regulating individual non-linear loads so they work better together; and using the presence of a linear load to normalize the overall system current flow.

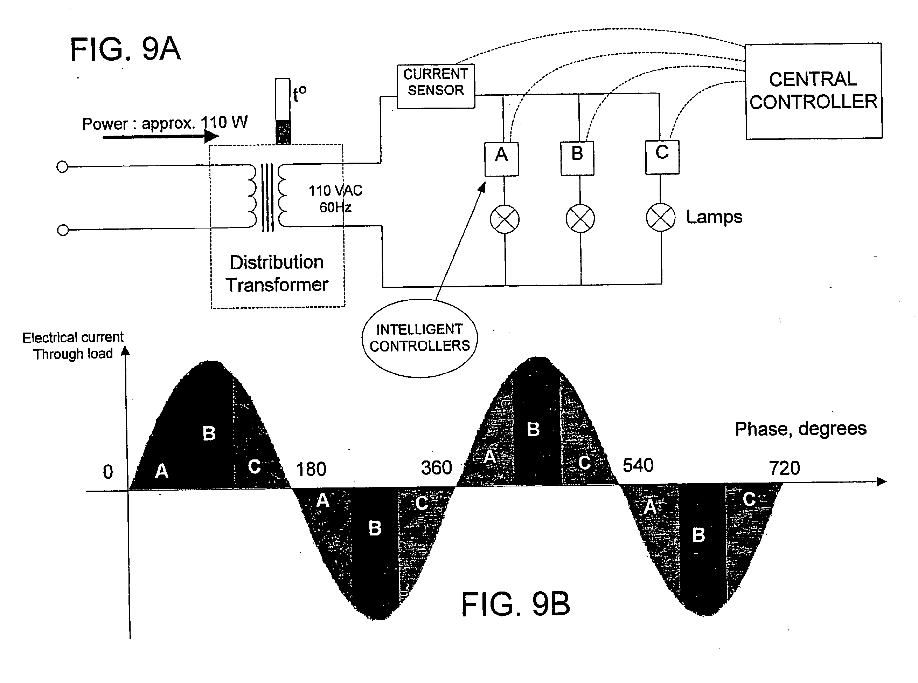

First, we propose to use a distributed network of sensor and dimmers (power regulators) to reduce harmonic distortions and associated heat losses. Referring now to FIG. 9A, three dimmers are again shown as loads. Here, a current sensor labeled "A" is deployed in the circuit to measure the current waveform. It functions to measures the shape of the current waveform and transfer this information to a central controller, using wired or wireless network protocols.

The central controller, labeled "B" in FIG. 9A, analyses the harmonic distortions and calculates a start phase for each of the dimmers to minimize the total harmonic currents. This is preferably implemented through the use of "smart dimmers" which means a dimmer that can select start phase and optionally stop phase of the power line cycle in response to a control signal or command. In some embodiments, the control signal is transmitted to the smart dimmers from the central controller via a wireless communication channel. It could also be hard-wired. It would also be equivalent to transmit the control signaling in the power line itself, a signaling technique that is well known for other uses. Preferably, the control analysis is carried out in software in the central controller, and most preferably it is implemented in an application software program loaded and executed in the central controller.

FIG. 9B illustrates one solution in which each lobe of the power line current waveform is divided into three segments, during each of which a corresponding one of the lighting (or other) loads receives power. The overall effect is to minimize harmonics, i.e., the resulting current waveform for the system is substantially linear. This is accomplished by sending on-phase and off-phase commands to the smart dimmers, for example assigning load B to be ON during 60-120 degrees phase angle, and again at 240-300 degrees, etc. This aspect of the invention improves the power line voltage quality, and saves electrical energy previously dissipated in distribution transformers due to harmonic current heating. Moreover, the size/weight of the distribution transformer can be decreased due to lower heat dissipation; again saving costs.

Second, we propose another solution to address non-linear loading issues. This second solution can be used together with the first solution, or as an alternative. It will typically require somewhat less hardware (fewer control components). This solution takes advantage of the ability to control a resistive (linear) load in the same network, and does so in a way that compensates for or "normalizes" the harmonic distortion that results from non-linear loading of the types described above. A residential electric water heater is a good example of a linear (resistive) load. Importantly, it will function with a non-linear supply.

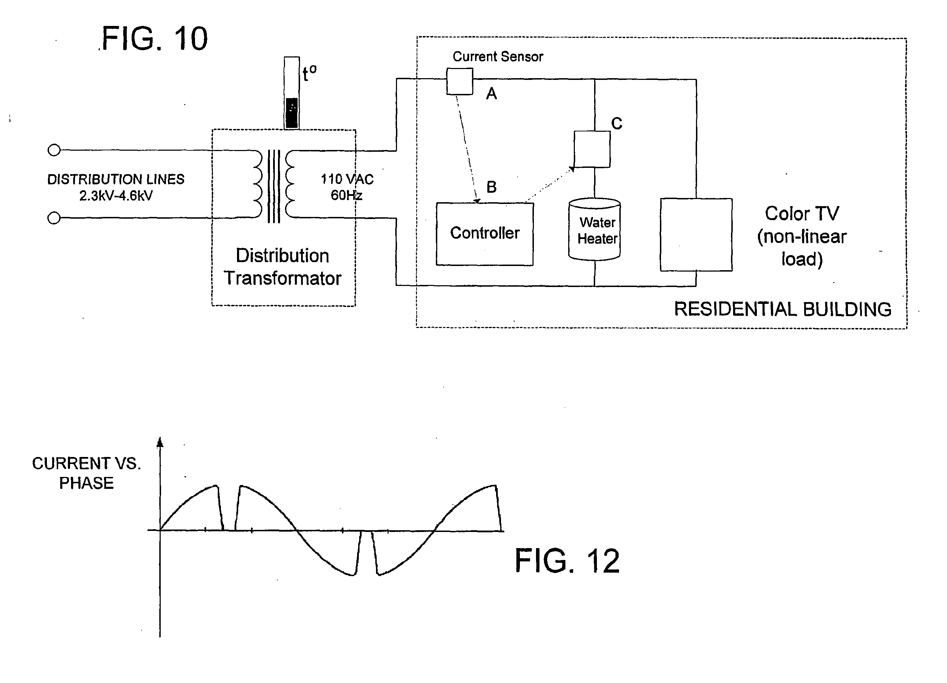

FIG. 10 illustrates one embodiment of this second solution. Here, a current sensor "A" is used, as before, to capture the electrical current waveform in the system. It sends the waveform data to a central controller "B", preferably by a wireless channel. In both the first and second solutions, the current sensor (load current waveform) data should be updated periodically. This update can be scheduled, pushed, polled or any other convenient mechanism. Advantageously, in a home automation network context, the application software can be arranged to update the current sensor data whenever a change in made to the lighting settings, either manually or programmatically as discussed elsewhere herein.

A linear load, in this example a water heater, is deployed in the circuit as other loads, linear and non-linear. The water heater power is regulated by a "smart controller" or "intelligent controller" functionally similar to the "smart dimmer" described earlier, i.e., a controller that can select start phase and optionally stop phase of the power line cycle for powering an attached load in response to a control signal or command. A smart controller can handle larger loads typically than a smart dimmer. In some embodiments, the control signal is transmitted to the smart controllerfrom the central controller via a wireless communication channel. The goal is to regulate current through the linear load in a manner that normalizes the non-linear loads present.

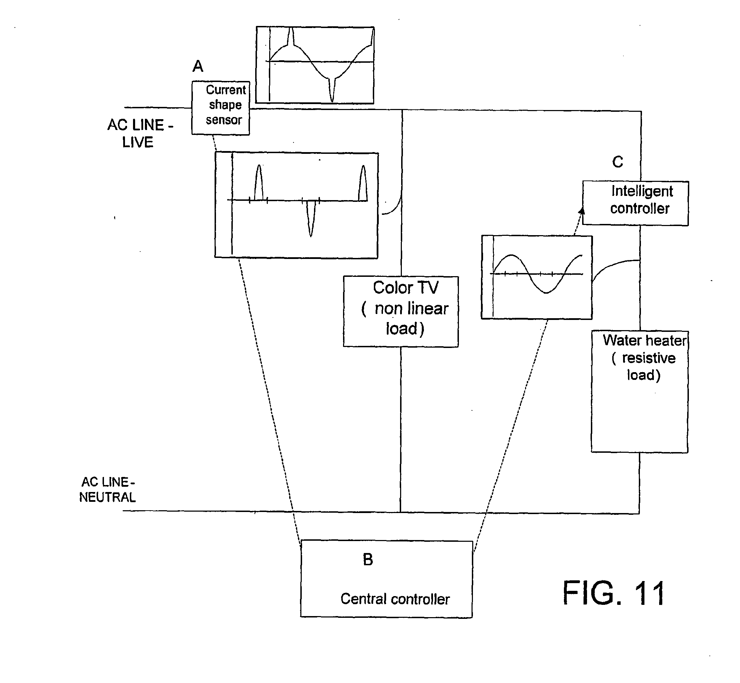

FIG. 11 provides an example that illustrates this process in one application. Here, the AC line (live) has two loads of interest - a color TV (non-linear load) and a water heater (resistive load). A current shape sensor detects the total current -as indicated in insert "T". The current waveform T exhibits excursions from the sinusoid (evidencing harmonics) caused by the non-linear TV load. The current shape is communicated to the central controller. It can be represented or encoded in various ways.

An "intelligent controller" is deployed to regulate current to the water heater responsive to a control signal or command as described earlier. In this example, the central controller, preferably in software, analyses the current waveform "T" and determines a complementary or normalizing waveform - shown in FIG. 12 - for regulating the resistive (water heater) load. The water heater works as well as before, but with this waveform, the overall system load in normalized to that it is substantially sinusoidal, i.e., it exhibits a minimum of harmonic distortion. This provides the same benefits as mentioned above. Details of the normalizing communications and commands, e.g. coding, error protection, resolution, etc. are matters of design choice for a given application. Preferably, the invention is embodied in systems that leverage industry standard wireless protocols, microproces-

sor operating systems, API's and the like.

The inventors estimate that a typical residential system could enjoy energy economy up to 10% - 20% using the present inventions, and this savings is independent of other energy savings methods.

It will be obvious to those having skill in the art that many changes may be made to the details of the above-described embodiments without departing from the underlying principles of the invention. The scope of the present invention should, therefore, be determined only by the following claims.

## Claims

1. A method for reducing harmonics in residential power circuits thereby saving energy by reducing dissipation in distribution transformers that supply such circuits, the method comprising:

   monitoring current-versus-phase characteristics of an electrical current through a single-phase load circuit in a residential power circuit; providing a controllable power regulator for each of at least two non-linear loads in the load circuit; and responsive to said monitoring step, controlling the power regulators to effect a corresponding selected start phase in each power regulator, the start phases being selected as different from one another so as to reduce harmonics in the power circuit.

2. A method for reducing harmonics according to claim 1 wherein said controlling step includes controlling the power regulators so that each power regulator effects a corresponding ON phase that is substantially non-overlapping with the ON phases of the other power regulators, thereby reducing the total current load.

3. A method for reducing harmonics according to claim 1 wherein said controlling step includes controlling the power regulators so that each power regulator effects a corresponding ON phase and a corresponding cut-off phase that are coordinated so as to linearize the total load in the load circuit.

4. A method for reducing harmonics according to claim 1 wherein said monitoring step includes providing a current sensor coupled to the load circuit, providing a wireless transceiver coupled to the current sensor, and delivering the current-versus-phase information via the wireless transceiver.

5. A method for reducing harmonics according to claim 4 wherein said controlling the power regulators comprises:

   providing a central controller having wireless communication capability; in the central controller, receiving the current-versus-phase information via the wireless transceiver from the current sensor; providing a corresponding wireless transceiver coupled to each of the controllable power regulators; and controlling the power regulators from the central controller via the respective wireless transceivers.

6. A method for reducing harmonics in residential power circuits thereby saving energy by reducing dissipation in distribution transformers that supply such circuits, the method comprising:

   monitoring current-versus-phase characteristics of an electrical current through a single-phase load circuit in a residential power circuit, where the load circuit includes a non-linear load; providing a controllable power regulator coupled to a linear load in the load circuit; and responsive to said monitoring step, controlling the power regulator so as to regulate power supplied to the linear load so as to minimize harmonic distortion that would otherwise arise in the load circuit from the non-linear load.

7. A method for reducing harmonics according to claim 6 wherein said monitoring step includes providing a current sensor coupled to the load circuit, providing a wireless transceiver coupled to the current sensor, and delivering the current-versus-phase information to a central controller via the wireless transceiver.

8. A method for reducing harmonics according to claim 6 wherein said controlling the power regulator is done under control of software executing in the central controller.

FIG. 1A

Standard Home Electrical Box

HIP 100

FIG. 1B

FIG. 2A

FIG. 2B

FIG. 2C

DAMPER

WIRELESS CONTROLLER A

CENTRAL CONTROLLER

WIRELESS CONTROLLER B

COMPUTER

WI FI

VIDEO

DOOR LOCK DEVICE

WC

WIRELESS CONTROLLER C

FIG. 3

EP 1 814 260 A2

FIG. 4

**FIG. 5**

SOFTWARE:
100K-1M lines of
code
Commercial test
coverage

Peripheral
devices

Switch controlled
by processor B

SOFTWARE:
300-500 lines of
code
100% test
coverage

Processor A
(primary)

Processor B
(secondary)

Internal
RAM

Internal
ROM

Interprocessor
communication
link

ROM

RAM

FIG. 6

Power : approx. **300 W** →

DISTRIBUTION LINES
2.3kV-4.6kV

Distribution
Transformer

110 VAC
60Hz

t°

Conventional dimmers
set to **100%** brightness
Lamps

RESIDENTIAL BUILDING

## FIG. 7A

Electrical current
Through load

Phase, degrees

0    180    360    540    720

## FIG. 7B

TEMP RISE

Power : approx. 110 W

t°

Conventional
dimmers
set to 33%
brightness

DISTRIBUTION LINES
2.3kV-4.6kV

110 VAC
60Hz

Lamps

Distribution
Transformator

RESIDENTIAL BUILDING

## FIG. 8A

Electrical
current
Through load

Phase, degrees

0

33%

180

360

33%

540

720

33%

33%

33%

## FIG. 8B

## FIG. 9A

Power : approx. 110 W

$t^o$

110 VAC
60Hz

Distribution
Transformer

CURRENT
SENSOR

A    B    C

Lamps

INTELLIGENT
CONTROLLERS

CENTRAL
CONTROLLER

Electrical current
Through load

0        180        360        540        720        Phase, degrees

A   B   C        A   B   C

A   B   C        A   B   C

FIG. 9B

EP 1 814 260 A2

# FIG. 10

DISTRIBUTION LINES
2.3kV-4.6kV

Distribution
Transformator

110 VAC
60Hz

$t^o$

Current Sensor

A

B

Controller

C

Water
Heater

Color TV
(non-linear
load)

RESIDENTIAL BUILDING

CURRENT VS.
PHASE

FIG. 12

EP 1 814 260 A2

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61940004 P
- US 71493805 P

- US 5568371 A, Pitel